(19) Europäisches Patentamt
European Patent Office
Office européen des brevets

(11) **EP 4 311 687 A1**

(12) # EUROPEAN PATENT APPLICATION

(43) Date of publication:
**31.01.2024 Bulletin 2024/05**

(21) Application number: **23182452.5**

(22) Date of filing: **29.06.2023**

(51) International Patent Classification (IPC):
***B60C 1/00*** *(2006.01)* ***C08L 23/28*** *(2006.01)*

(52) Cooperative Patent Classification (CPC):
(C-Sets available)
**B60C 1/0008; C08L 23/283** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 JP 2022118204**

(71) Applicant: **Sumitomo Rubber Industries, Ltd.**
**Kobe-shi, Hyogo 651-0072 (JP)**

(72) Inventor: **ONISHI, Hayato**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **RUBBER COMPOSITION FOR INNER LINER AND TIRE**

(57) It is an object of the present invention to provide a rubber composition for inner liner that is excellent in molding processability and air permeation resistance. Provided is a rubber composition for inner liner that comprises a rubber component, carbon black, and a fatty acid compound, wherein the carbon black comprises a recycled carbon black.

EP 4 311 687 A1

(52) Cooperative Patent Classification (CPC): (Cont.)

C-Sets
**C08L 23/283, C08L 7/00, C08L 23/04,**
**C08K 5/103, C08K 3/04**

## Description

### TECHNICAL FIELD

The present invention relates to a rubber composition for inner liner and a tire.

### BACKGROUND OF THE INVENTION

An inner liner mainly composed of a butyl-based rubber excellent in air permeation resistance is provided on an inner surface of a tire, whereby air pressure is maintained. Therefore, rubber composition for inner liner has been required to have an excellent air permeation resistance. Moreover, in producing a tire, tire members need to be attached together at a vulcanization stage to form a green tire. Therefore, the rubber composition for inner liner has been required to have a high tack property over time (high adhesive force over time) and to be easily molded.

WO 2017/018386 describes a rubber composition for inner liner in which air permeation resistance, molding processability, and durability are improved by using a predetermined terpene-based resin.

### SUMMARY OF THE INVENTION

Because of the growing needs for consideration for environment in recent years, various efforts toward reuse of used materials have been made for tires. Regarding carbon black, carbon black obtained by pyrolysis of a used tire (recycled carbon black) is known. However, there is a concern that the recycled carbon black is inferior to a common carbon black in reinforcing property.

It is an object of the present invention to provide a rubber composition for inner liner that is excellent in molding processability and air permeation resistance while being produced using a recycled carbon black, and a tire comprising an inner liner composed of the rubber composition for inner liner.

The present invention relates to the following rubber composition for inner liner:

> A rubber composition for inner liner, the rubber composition comprising a rubber component, carbon black, and a fatty acid compound,
> wherein the carbon black comprises a recycled carbon black.

According to the present invention, a rubber composition for inner liner that is excellent in molding processability and air permeation resistance can be provided.

### BRIEF DESCRIPTION OF THE DRAWINGS

FIG. 1 is a schematic view of (only an upper right-side part of) a cross-section of a tire according to one embodiment of the present invention when the tire is cut along a plane passing through a tire rotation axis.

### DETAILED DESCRIPTION

The rubber composition for inner liner of the present invention comprises a rubber component, carbon black, and a fatty acid compound, wherein the carbon black comprises a recycled carbon black.

As a mechanism for achieving both air permeation resistance and molding processability in the rubber composition for inner liner of the present invention, the following is considered, although the following consideration is not intended to be bound by any theory. First, (1) since the fatty acid compound has a fatty acid moiety, the fatty acid compound itself has a plasticizing effect on a rubber. Moreover, (2) it is considered that the fatty acid compound interacts with carbon black comprising the recycled carbon black, whereby dispersibility of the carbon black can be improved. Here, since the carbon black in the rubber composition can inhibit permeation of gas molecules, it is inferred that the more uniformly the carbon black is dispersed, the greater an effect of inhibiting permeation of gas molecules becomes. Additionally, with cooperation of these features (1) and (2), it is considered that both air permeation resistance and molding processability are achieved in the rubber composition for inner liner of the present invention.

The fatty acid compound preferably comprises at least one selected from the group consisting of a fatty acid amide, a fatty acid ester, and a fatty acid salt.

This is because a relatively strong interaction of such a fatty acid compound with the carbon black can be expected.

The rubber component preferably comprises a butyl-based rubber, and a content of the butyl-based rubber in the rubber component is preferably greater than 70% by mass and less than 90% by mass.

This is because, while the higher the ratio of the butyl-based rubber becomes, the more greatly the improvement of air permeation resistance can be expected, a too high ratio of the butyl-based rubber makes it difficult to achieve both air permeation resistance and molding processability.

A content of the recycled carbon black in the carbon black is preferably greater than 5% by mass and less than 40% by mass.

This is because, while it is preferable, from the viewpoint of substantially containing the recycled carbon black, that the content of the recycled carbon black is greater than the predetermined value, there is a concern about reinforcing property of the recycled carbon black as compared with a common carbon black, and thus it is preferable to make the content of the recycled carbon black less than the predetermined value.

A content of the fatty acid compound based on 100 parts by mass of the rubber component is preferably 0.5 parts by mass or more and 3.0 parts by mass or less.

While it is preferable that the amount of the fatty acid compound is equal to or greater than the predetermined amount from the viewpoint of effects of the present invention, it is preferable that the amount of the fatty acid compound is equal to or less than the predetermined amount from the viewpoint that adhesiveness with a rubber is not deteriorated.

The rubber composition preferably comprises a hydrocarbon resin, and a content of the hydrocarbon resin based on 100 parts by mass of the rubber component is preferably 0.5 parts by mass or more and 3.0 parts by mass or less.

This is because, when the rubber composition comprises an appropriate amount of a hydrocarbon resin, adhesiveness between rubbers is improved, which becomes more advantageous in terms of molding processability.

When a content (part by mass) of the carbon black based on 100 parts by mass of the rubber component is referred to as A and a content (part by mass) of the fatty acid compound based on 100 parts by mass of the rubber component is referred to as B, A and B preferably satisfy the following inequality (1).

$$B / A \times 100 > 1.5 \quad (1)$$

This is because, when the rubber composition comprises a fatty acid compound whose amount is equal to or greater than the predetermined amount relative to an amount of the carbon black, improvement in dispersibility of the carbon black can be expected. On the other hand, an upper limit of the value on the left side of the inequality (1) is not particularly limited from the viewpoint of the improvement in dispersibility of the carbon black.

Another embodiment of the present invention is a tire comprising an inner liner composed of the above-described rubber composition for inner liner.

This is because the rubber composition for inner liner is appropriately used for a tire inner liner.

When a content (part by mass) of the carbon black based on 100 parts by mass of the rubber component is referred to as A and a thickness (mm) of the inner liner is referred to as D, A and D preferably satisfy the following inequality (2).

$$A \times D > 50 \quad (2)$$

This is because, while air permeation resistance is improved in proportion to the content (A) of the carbon black due to improvement in dispersibility of the carbon black in the present invention, air permeation resistance is improved in proportion to the thickness (D) of the inner liner as well, and therefore, when a product of A and D is greater than the predetermined value, it is considered that a desired air permeation resistance can be achieved.

<Definition>

The "standardized rim" is a rim, in a standard system including a standard on which the tire is based, defined for each tire by the standard. The standardized rim refers to, for example, a standard rim in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). Additionally, if the tire is not defined in the above-described standard, the "standardized rim" refers to a rim having the smallest rim diameter and secondly having the narrowest rim width among rims that can be rim-assembled to the tire and retain internal pressure, that is, rims that do not cause air leakage between the rim and the tire.

The "recycled carbon black" refers to carbon black that is obtained by a pyrolysis process of a product comprising carbon black such as a used tire and the like. The recycled carbon black has a ratio of a mass of ash (ash content) which is a component that does not combust, the ratio being 13% by mass or more when the product is subjected to oxidative combustion by heating in the air, using a thermal weight measurement method according to JIS K 6226-2:2003.

That is, the recycled carbon black has a mass (carbon amount) to be lost by the oxidative combustion, the mass being less than 87% by mass. The recycled carbon black is also referred to as a recycled carbon and may also be expressed by rCB.

The "thickness (D) of the inner liner" refers to a thickness (mm) of the inner liner on a tire equatorial plane and is measured in a state where a tire cut along a plane including a tire rotation axis is held by a standardized rim.

<Measuring method>

A "styrene content" is calculated by $^1$H-NMR measurement.

A "vinyl bond amount (1,2-bond butadiene unit amount)" is measured by infrared absorption spectrometry.

A "weight-average molecular weight (Mw)" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A "cis content (cis-1 ,4-bond butadiene unit amount)" is measured by infrared absorption spectrometry.

An "ash content of the recycled carbon black" is measured by a thermal weight measurement method of JIS K 6226-2:2003.

A "$N_2$SA of carbon black" is a value calculated according to JIS K 6217-2:2017.

A "$N_2$SA of silica" is a value measured by a BET method according to ASTM D3037-93.

Unless otherwise noted, a "softening point of a resin and the like" is a temperature at which a sphere drops when the softening point specified in JIS K 6220-1: 2015 is measured with a ring and ball softening point measuring device. In a case where the softening point is measured by another method, a notice to the method will be given.

[Rubber composition]

The rubber composition for inner liner of the present invention will be described.

<Rubber component>

The rubber component of the present invention preferably comprises a butyl-based rubber.

(Butyl-based rubber)

Examples of the butyl-based rubber include a butyl rubber (IIR), a halogenated butyl rubber (X-IIR), a brominated isobutylene-p-methylstyrene copolymer (Br-IPSM, manufactured by Exxon Mobil Chemical, etc.), and the like. The butyl-based rubber may be used alone, or two or more thereof may be used in combination. Besides, examples of the copolymer can include any aspects such as random copolymers, block copolymers, and the like. Among them, random copolymers are preferable.

The butyl rubber (IIR) refers to a non-halogenated butyl rubber known as a so-called regular butyl rubber or to a reclaimed butyl-based rubber. As the IIR, any of those commonly used in the tire industry can be appropriately used. Examples of commercially available products of the reclaimed butyl-based rubber include, for example, a tube reclaimed rubber manufactured by MURAOKA RUBBER RECLAIMING Co., Ltd., and the like. The tube reclaimed rubber manufactured by MURAOKA RUBBER RECLAIMING Co., Ltd. is a reclaimed rubber produced by performing a heating process on a butyl tube under a pressurized condition.

The halogenated butyl rubber (X-IIR) is one in which halogens are introduced into molecules of a regular butyl rubber. As the halogenated butyl rubber, a brominated butyl rubber (Br-IIR) or a chlorinated butyl rubber (Cl-IIR) can be appropriately used. Examples of commercially available products of the halogenated butyl rubber include those manufactured by Exxon Chemical K.K., Exxon Mobil Chemical, etc.

The butyl-based rubber is preferably one including at least one selected from the group consisting of the butyl rubber (IIR) and the halogenated butyl rubber (X-IIR). Among them, the X-IIR is preferable for the reason that a sufficient vulcanization reaction can be obtained.

(Other rubber components)

Examples of other rubber components other than butyl-based rubbers include, for example, diene-based rubbers such as an isoprene-based rubber (IR-based rubber), a butadiene rubber (BR), a styrene-butadiene rubber (SBR), a styrene-isoprene-butadiene rubber (SIBR), a chloroprene rubber (CR), an acrylonitrile-butadiene rubber (NBR), a polynorbornene rubber, and the like; and non-diene-based rubbers such as a hydrogenated nitrile rubber (HNBR), an

ethylene propylene rubber, a silicone rubber, a polyethylene chloride rubber, a fluororubber (FKM), an acrylic rubber (ACM), a hydrin rubber, and the like. The other rubber components may be used alone, or two or more thereof may be used in combination. Among them, the diene-based rubbers are preferable, and among the diene-based rubbers, the isoprene-based rubber is preferable from the viewpoint of improvement of adhesiveness and adherence to an adjacent tire member or the like.

Examples of the isoprene-based rubber include an isoprene rubber (IR), a natural rubber (NR), a modified natural rubber, and the like. Among them, the NR is preferable. Examples of the modified natural rubber include an epoxidized natural rubber (ENR), a hydrogenated natural rubber (HNR), a grafted natural rubber, and the like. Moreover, as the NR, for example, those common in the tire industry can be used, such as SIR20, RSS#3, TSR20, and the like.

(Content)

A content of the butyl-based rubber in 100% by mass of the rubber component is preferably 60 % by mass or more, more preferably greater than 70% by mass, further preferably 80% by mass or more, or can also be 100% by mass, from the viewpoint of air permeation resistance. On the other hand, the content is preferably less than 95% by mass, more preferably less than 90% by mass, further preferably less than 85% by mass, further preferably 80% by mass or less, from the viewpoint of achieving both molding processability and air permeation resistance.

A content of the IR-based rubber, when compounded, in 100% by mass of the rubber component is preferably greater than 5% by mass, more preferably greater than 10% by mass, further preferably greater than 15% by mass, further preferably 20% by mass or more, from the viewpoint of molding processability. On the other hand, the content is preferably less than 30% by mass, more preferably 20% by mass or less, further preferably less than 10% by mass, from the viewpoint of air permeation resistance.

<Carbon black>

Carbon black of the present invention comprises a recycled carbon black (rCB).

(rCB)

In the present invention, the recycled carbon black refers to carbon black that is obtained by a pyrolysis process of a product comprising carbon black such as a used tire and the like. The recycled carbon black has a ratio of the mass of ash (ash content) which is a component that does not combust, the ratio being 13% by mass or more when the product is subjected to oxidative combustion by heating in the air, using a thermal weight measurement method according to JIS K 6226-2:2003. The ash content of the recycled carbon black is preferably 14% by mass or more, more preferably 15% by mass or more, further preferably 16% by mass or more, further preferably 17% by mass or more.

The recycled carbon black can be obtained by a pyrolysis process of a used tire. For example, EP 3427975 A describes that a recycled carbon black is obtained by pyrolysis of an organic material at 550 to 800°C in the absence of oxygen or by vacuum pyrolysis at a relatively low temperature ([0027]), with reference to pp.408-449, particularly, p.438, p.440, and p.442 of '"Rubber Chemistry and Technology', Vol. 85, No. 3 (2012)". As described in [0004] of JP 6856781 B, carbon black obtained by such pyrolysis process usually lacks a functional group on its surface ("Comparison of surface morphology with chemistry between pyrolysis carbon black and commercially available carbon black", Powder Technology, 160 (2005), pp.190-193).

The recycled carbon black of the present invention may be one lacking a functional group on its surface or one treated to introduce a functional group on its surface. Among them, a recycled carbon black treated to introduce a functional group on its surface is preferable from the viewpoint of the effects of the present invention. In this case, the added functional group makes it easier for the recycled carbon black to interact with a fatty acid compound, so that dispersibility of the recycled carbon black is improved, which is thus preferable.

A treatment for introducing a functional group on a surface of a recycled carbon black can be performed by a conventional method. For example, in the specification of EP 3173251 A, carbon black obtained by a pyrolysis process is treated with potassium permanganate under an acidic condition, thereby obtaining carbon black including a hydroxyl group and/or a carboxyl group on its surface. Moreover, in JP 6856781 B, carbon black obtained by a pyrolysis process is treated with an amino acid compound that includes at least one thiol group or at least one disulfide group, thereby obtaining carbon black whose surface is activated. Examples of the recycled carbon black of the present invention also include carbon black treated to introduce a functional group on its surface.

(Carbon black other than rCB)

Carbon black other than rCB is not particularly limited, examples of which include N134, N110, N220, N234,

N219, N339, N330, N326, N351, N550, N600, N660, N762, and the like. As a commercially available product, products manufactured by ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. The carbon black may be used alone, or two or more thereof may be used in combination.

A nitrogen adsorption specific surface area ($N_2SA$) of the carbon black is preferably less than 50 $m^2/g$, more preferably less than 45 $m^2/g$, further preferably less than 40 $m^2/g$, from the viewpoints of air permeation resistance and durability. Carbon black having a small $N_2SA$ is generally referred to as a large particle size carbon black. A lower limit of the $N_2SA$ of carbon black is, but not particularly limited to, for example, greater than 20 $m^2/g$. Examples of the $N_2SA$ of carbon black include, for example, 29 $m^2/g$ of $N_2SA$ for SHOWBLACK N762 manufactured by Cabot Japan K.K., 35 $m^2/g$ of $N_2SA$ for Statex N660 manufactured by Jiangix Black Cat Carbon Black Co., Ltd., 35 $m^2/g$ of $N_2SA$ for SHOWBLACK N660 manufactured by Cabot Japan K.K., and the like. Besides, the $N_2SA$ of carbon black is a value measured by the above-described method.

(Content)

A content of carbon black comprising a recycled carbon black based on 100 parts by mass of the rubber component is preferably greater than 20 parts by mass, more preferably greater than 25 parts by mass, further preferably greater than 30 parts by mass, further preferably greater than 35 parts by mass, from the viewpoints of reinforcing property and crack growth resistance. Moreover, the content of the carbon black is preferably less than 100 parts by mass, more preferably less than 90 parts by mass, further preferably less than 80 parts by mass or less, further preferably less than 75 parts by mass, from the viewpoint of a reinforcing effect.

A content of the recycled carbon black in 100% by mass of carbon black is preferably less than 50% by mass, more preferably less than 40% by mass, further preferably less than 30% by mass, further preferably 25% by mass or less, further preferably less than 20% by mass, from the viewpoint of the effects of the present invention. Moreover, the content of the recycled carbon black is preferably greater than 5% by mass, more preferably 8% by mass or more, further preferably greater than 15% by mass, further preferably greater than 20% by mass, further preferably 25% by mass or more, from the viewpoint of environmental load reduction.

(Fatty acid compound)

The fatty acid compound is a salt of a fatty acid or a compound obtained by combining a fatty acid with a substance other than fatty acids. Examples of the fatty acid compound include, for example, fatty acid amide, fatty acid ester, fatty acid salt, and the like. The fatty acid compounds may be used alone, or two or more thereof may be used in combination.

Among fatty acid compounds, each of fatty acid amide, fatty acid ester, fatty acid salt, and the like can form a hydrogen bond with carbon black, and thus it is considered that dispersibility of carbon black can be improved by their relatively strong interaction. Here, since carbon black in a rubber composition can inhibit permeation of gas molecules, it is inferred that the more uniformly carbon black is dispersed, the greater an effect of inhibiting permeation of gas molecules becomes. Therefore, the fatty acid compound is preferably a compound such as fatty acid amide, fatty acid ester, fatty acid salt, or the like, which compound is capable of forming a hydrogen bond or the like with carbon black.

As the fatty acid compound, fatty acid salt, a mixture of fatty acid salt and fatty acid amide, and the like can be appropriately used.

As the fatty acid compound, those manufactured by Rhein Chemie, Schill+Seilacher GmbH, etc. can be used.

(Fatty acid amide)

The fatty acid amide is a compound in which a fatty acid and amine form an amide bond. As a fatty acid moiety of the fatty acid amide, any of saturated fatty acid and unsaturated fatty acid can be used.

The carbon number of each of these fatty acids is, for example, preferably 4 or more, more preferably 8 or more, further preferably 12 or more. On the other hand, the carbon number of each fatty acid is preferably 30 or less, more preferably 24 or less, further preferably 20 or less. Specific examples of these fatty acids include, as the saturated fatty acid, butanoic acid, butyric acid, pentanoic acid, hexanoic acid, heptanoic acid, octanoic acid, nonanoic acid, decanoic acid, dodecanoic acid, tetradecanoic acid, pentadecanoic acid, hexadecanoic acid, palmitoyl acid, heptadecanoic acid, octadecanoic acid, octadecenoic acid, octadecadienoic acid, octadecatrienoic acid, nonadecanoic acid, icosanoic acid, docosanoic acid, hexadocosanoic acid, octadocosanoic acid, and the like. Moreover, examples of these fatty acids include, as the unsaturated fatty acid, mono-unsaturated fatty acids such as crotonic acid, myristoleic acid, palmitoleic acid, oleic acid, elaidic acid, vaccenic acid, gadoleic acid, erucic acid, nervonic acid, and the like; di-unsaturated fatty acids such as linoleic acid and the like; tri-unsaturated fatty acids such as $\alpha$-linolenic acid, eleostearic acid,

and the like; tetra-unsaturated fatty acids such as stearidonic acid, arachidonic acid, and the like; penta-unsaturated fatty acids such as eicosapentaenoic acid, clupanodonic acid, and the like; hexa-unsaturated fatty acids such as docosahexaenoic acid and the like; and the like. A fatty acid moiety constituting fatty acid amide may be one having only one fatty-acid residue like stearic acid amide, as well as one having two fatty-acid residues like alkylene-bis fatty acid amide, and further, it may be one having three or more fatty-acid residues. In a case where the fatty acid moiety constituting fatty acid amide has a plurality of fatty acid residues, the carbon number of the above-described fatty acid corresponds to the carbon number per amide group.

Specific examples of fatty acid amide include a compound in which amide is formed by reaction of a fatty acid residue of the above-described fatty acid moiety with amine. The fatty acid amide may be used alone, or two or more thereof may be used in combination.

(Fatty acid ester)

The fatty acid ester is a compound in which fatty acid and alcohol form an ester bond. As a fatty acid moiety constituting the fatty acid ester, the same one as the fatty acid moiety described above for the fatty acid amide can be used.

Examples of an alcohol moiety constituting the fatty acid ester include aliphatic alcohols. As a hydrocarbon moiety of each of the aliphatic alcohols, any of saturated and unsaturated ones can be used.

The carbon number of the each of the aliphatic alcohols is, for example, preferably 4 or more, more preferably 8 or more, further preferably 12 or more. On the other hand, the carbon number of each aliphatic alcohol is preferably 30 or less, more preferably 24 or less, further preferably 20 or less. Specific examples of the aliphatic alcohols include 1-octanol (C8), 1-decanol (C10), lauryl alcohol (C12), myristyl alcohol (C14), palmitoleyl alcohol (C16), stearyl alcohol (C18), oleyl alcohol (C18), linolenyl alcohol (C18), behenyl alcohol (C22), myricyl alcohol (C30), and the like. The aliphatic alcohols may be monohydric alcohols, as well as dihydric or more-hydric alcohols, and for example, glycol, glycerin, erythritol, sorbitol, etc. can also be used.

Specific examples of the fatty acid ester include a compound in which a fatty acid residue of the above-described fatty acid moiety reacts with a aliphatic alcohol to form ester. The fatty acid ester may be used alone, or two or more thereof may be used in combination.

(Fatty acid salt)

Examples of the fatty acid salt include a compound in which fatty acid and metal form a salt. As a fatty acid moiety constituting the fatty acid salt, the same one as the fatty acid moiety described above for the fatty acid amide can be used.

Specific examples of a metal component constituting the fatty acid salt include Na, K, Mg, Ag, Ca, Ti, Cu, Fe, Zn, Co, Al, and the like. Among them, Zn and Ca are preferable.

Specific examples of the fatty acid salt include a compound in which a fatty acid residue of the above-described fatty acid moiety reacts with the metal component to form a salt. The fatty acid salt may be used alone, or two or more thereof may be used in combination.

(Content)

A content of the fatty acid compound based on 100 parts by mass of the rubber component is preferably 0.5 parts by mass or more, more preferably greater than 1.0 part by mass, further preferably greater than 1.5 parts by mass, from the viewpoint of the effects of the present invention. On the other hand, the content is preferably 5.0 parts by mass or less, more preferably less than 4.0 parts by mass, further preferably 3.0 parts by mass or less, from the viewpoint of securing adhesiveness.

(Inequality (1))

When a content (part by mass) of the carbon black based on 100 parts by mass of the rubber component is referred to as A and a content (part by mass) of the fatty acid compound based on 100 parts by mass of the rubber component is referred to as B, A and B preferably satisfy the following inequality (1).

$$B / A \times 100 > 1.5 \qquad (1)$$

The right side of the inequality (1) is preferably 2.0, more preferably 3.7, further preferably 4.9, further preferably 8.0. On the other hand, the value on the left side of the inequality (1) is usually about 16.0 or less or may be 12.0 or less.

In A of the inequality (1), a content of the recycled carbon black based on 100% by mass of carbon black is preferably less than 50% by mass, more preferably less than 40% by mass, further preferably less than 30% by mass, further preferably 25% by mass or less, further preferably less than 20% by mass, from the viewpoint of reinforcing property. Moreover, the content of the recycled carbon black is preferably greater than 5% by mass, more preferably 8% by mass or more, further preferably greater than 15% by mass, further preferably greater than 20% by mass, further preferably 25% by mass or more, from the viewpoint of environmental load reduction.

<Hydrocarbon resin>

The rubber composition of the present invention can comprise a hydrocarbon resin. Examples of the hydrocarbon resin include resins each being in a solid state at a normal temperature and at a normal pressure and including an aromatic hydrocarbon and/or an aliphatic hydrocarbon. Examples of the aliphatic hydrocarbon resins include chain aliphatic hydrocarbon resins and cyclic aliphatic hydrocarbon resins. Examples of the hydrocarbon resins include, for example, indene-based aromatic hydrocarbon resins, styrene-based aromatic hydrocarbon resins, C5-based aliphatic hydrocarbon resins, and the like. They may be used alone, or two or more thereof may be used in combination. Among them, the C5-based aliphatic hydrocarbon is preferable.

(Indene-based aromatic hydrocarbon resin)

The indene-based aromatic hydrocarbon resins are polymers each including indene as a constituent monomer and including indene and/or coumarone as a main component (50% by mass or more) and as a monomer component constituting a resin skeleton. Each of these resins can further include a monomer component such as styrene, α-methylstyrene, vinyltoluene, and the like, in addition to indene and/or coumarone. More specifically, examples of such resins include not only a homopolymer obtained by homopolymerizing indene but also a copolymer obtained by copolymerizing indene and at least one of coumarone, styrene, and α-methylstyrene that are other monomers. Among them, a coumarone-indene resin that is a copolymer of indene and coumarone is preferable. The indene-based resins may be used alone, or two or more thereof may be used in combination.

(C5-based aliphatic hydrocarbon resin)

The C5-based aliphatic hydrocarbon resin is a polymer including a C5 fraction as a constituent monomer, examples of which include a polymer obtained by polymerizing a C5 fraction as a main component (greater than 50% by mass), and the like. Specifically, examples of the C5-based aliphatic hydrocarbon resin include not only homopolymers each obtained by homopolymerizing an olefinic hydrocarbon such as 1-pentene, 2-pentene, 2-methyl-1-butene, and the like, a diolefinic hydrocarbon such as 2-methyl-1,3-butadiene, 1,2-pentadiene, 1,3-pentadiene, and the like, that are C5 fractions, and copolymers each obtained by copolymerizing two or more types of the above-described C5 fractions, but also copolymers of C5 fractions and other monomers that may be polymerized with these C5 fractions. Here, examples of the other monomers can include C9 fractions such as vinyltoluene, indene, and methylidyne, and the like. The C5-based resins may be used alone, or two or more thereof may be used in combination.

(Styrene-based aromatic hydrocarbon resin)

The styrene-based aromatic hydrocarbon resin is a polymer including a styrene-based monomer as a constituent monomer, examples of which include a polymer obtained by polymerizing a styrene-based monomer as a main component (greater than 50% by mass), and the like. Specifically, examples of the styrene-based aromatic hydrocarbon resin include not only homopolymers each obtained by homopolymerizing styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, or the like that is a styrene-based monomer, and copolymers each obtained by copolymerizing two or more types of the above-described styrene-based monomers, but also copolymers of styrene-based monomers and other monomers that may be polymerized with these styrene-based monomers. Here, examples of the other monomers can include acrylonitriles such as acrylonitrile, methacrylonitrile, and the like; acryls; unsaturated carboxylic acids such as methacrylic acid, and the like; unsaturated carboxylic esters such as methyl acrylate, methyl methacrylate, and the like; conjugated dienes such as terpene, chloroprene, butadiene, isoprene, and the like; olefines such as 1-butene, 1-pentene, and the like; α,β-unsaturated carboxylic acid such as maleic anhydride and the like or acid anhydride thereof, and the like. As the styrene-based resin, for example, an α-methylstyrene-based resin (AMS) can be appropriately used. Examples of the α-methylstyrene-based resin include a homopolymer of α-methylstyrene (poly-α-methylstyrene), a copolymer of α-methylstyrene and at least one selected from the group consisting of styrene, methylstyrene, methoxystyrene, and divinylbenzene, and the like. The styrene-based resins may be used alone, or two or more thereof may be

used in combination.

As the hydrocarbon resin, those manufactured by Tosoh Corporation, Maruzen Petrochemical Co., Ltd., Kraton Corporation, etc. can be used.

(Content)

A content of the hydrocarbon resin based on 100 parts by mass of the rubber component is preferably 0.5 parts by mass or more, more preferably greater than 0.8 parts by mass, further preferably greater than 1.0 part by mass, from the viewpoint of securing adhesiveness. On the other hand, the content is preferably less than 5.0 parts by mass, more preferably less than 4.0 parts by mass, further preferably 3.0 parts by mass or less, further preferably less than 2.5 parts by mass.

(Softening point)

A softening point of the hydrocarbon resin is preferably higher than 80°C, more preferably higher than 100°C, further preferably higher than 120°C, from the viewpoint of the effects of the present invention. Moreover, the softening point is preferably lower than 160°C, more preferably lower than 150°C, further preferably lower than 140°C. Besides, the softening point of the hydrocarbon resin is a value measured by the above-described method.

As a commercially available product of the hydrocarbon resin, for example, products manufactured by Maruzen Petrochemical Co., Ltd., SUMITOMO BAKELITE CO., LTD., YASUHARA CHEMICAL CO., LTD., Tosoh Corporation, RÜTGERS Chemicals GmbH, BASF, Arizona Chemical Company, NITTO Chemical CO., LTD., Nippon Shokubai Co., Ltd., JXTG Nippon Oil & Energy Corporation, Arakawa Chemical Industries, Ltd., Taoka Chemical Co., Ltd., Exxon Mobil Corporation, Cray Valley, etc. can be used.

<Compatibilized resin>

The rubber composition of the present invention can comprise a compatibilized resin. The compatibilized resin refers to a resin that has a good affinity with both a rubber and a filler and that can reduce air gaps around a filler to contribute to improvement of air permeation resistance and durability. The compatibilized resin is not particularly limited. Examples of the compatibilized resin include, for example, an ethylene-propylene-styrene copolymer resin and the like. The compatibilized resins may be used alone, or two or more thereof may be used in combination.

The ethylene-propylene-styrene copolymer resin is a copolymer resin obtained by polymerizing styrene monomers, ethylene monomers, and propylene monomers and includes a constituent unit expressed by the following general formula (wherein each of m, n, and o indicates an integer equal to or greater than 1).

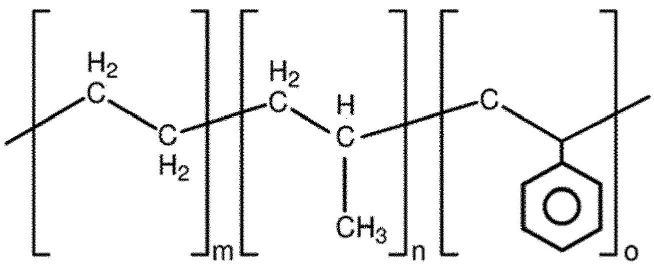

A total amount of a constituent unit derived from ethylene and a constituent unit derived from propylene in the ethylene-propylene-styrene copolymer resin (EP content, a sum of m and n in the above-described formula relative to the number of all constituent units) is not particularly limited. As one example, the total amount based on 100 mol% of the constituent unit is preferably greater than 60 mol%, more preferably greater than 65 mol%, further preferably greater than 70 mol%, from the viewpoint of eliminating air gaps between the butyl-based rubber and the filler to improve air permeation resistance. Moreover, the total amount based on 100 mol% of the constituent unit is preferably less than 98 mol%, more preferably less than 95 mol%, further preferably less than 93 mol%, from the viewpoint of tensile property.

As the ethylene-propylene-styrene copolymer resin, a commercially available product may be used. Examples of such a commercially available product include those manufactured and sold by Struktol GmbH, Performance Additives, LANXESS, etc.

<Other compounding agents>

The rubber composition of the present invention can appropriately comprise compounding agents commonly used for production of rubber compositions, such as, a filler other than carbon black such as silica and a different inorganic filler and the like, oil, zinc oxide, an antioxidant, stearic acid, wax, a vulcanizing agent, a vulcanization accelerator, and the like, in addition to the above-described components.

(Silica)

As the silica, one commonly used in the tire industry may be compounded. However, a silane coupling agent is compounded together with silica, and therefore the cost becomes high. Moreover, silica that is not covered with a silane coupling agent reaggregates in preparing an extruded sheet, which causes deterioration of processability of the sheet. Accordingly, it is preferable that silica is not used.

(Other inorganic filler)

The above-described other inorganic filler refers to an inorganic filer that is commonly used in the tire industry and that is one other than carbon black and silica. Examples of the "other inorganic filler" include aluminum hydroxide, talc, clay, graphite, mica, and the like. Among them, a flat inorganic filler is preferable for the reason that it is excellent in air permeation resistance as it blocks air permeation paths, and flat aluminum hydroxide and flat talc are more preferable and the flat talc is particularly preferable for the reason that they are also further excellent in molding processability. The other inorganic fillers can be used alone, or two or more thereof can be used.

A content of the other inorganic filler when compounded based on 100 parts by mass of the rubber component is preferably greater than 5 parts by mass, more preferably greater than 10 parts by mass, further preferably greater than 15 parts by mass, from the viewpoints of air permeation resistance, molding processability, and durability. Moreover, the content based on 100 parts by mass of the rubber component is preferably less than 50 parts by mass, more preferably less than 40 parts by mass, further preferably less than 30 parts by mass, for the reasons that effects of reinforcing property and crack growth resistance due to inclusion of carbon black are not deteriorated and that crack resistance, particularly crack resistance at a low temperature, is prevented from deteriorating due to increase of a glass transition temperature of the rubber composition.

(Oil)

Oil is not particularly limited, and any of those commonly used in the tire industry can be appropriately used, examples of which include, for example, process oils, vegetable oils and fats, animal oils and fats, and the like. Examples of the process oils include process oils such as paraffinic process oils, aromatic process oils, naphthenic process oils, and the like. Moreover, as an environmental measure, such examples include a process oil having a low content of a polycyclic aromatic (PCA) compound. Examples of the process oil having a low content of a PCA include treated distillate aromatic extracts (TDAE) reextracted from aromatic process oil, aroma alternative oils that are blended oils of asphalt and naphthenic oil, mild extraction solvates (MES), heavy naphthenic oil, and the like. Among them, the aromatic process oils are preferable, and the TDAE oils are more preferable. As the oil, for example, those manufactured and sold by H&R Group, ENEOS Corporation, Idemitsu Kosan Co., Ltd., Sankyo Yuka Kogyo K. K., etc., and the like can be used. The oils can be used alone, or two or more thereof can be used in combination.

A content of the oil based on 100 parts by mass of the rubber component is preferably greater than 1 part by mass, more preferably greater than 2 parts by mass, further preferably greater than 3 parts by mass, further preferably 5 parts by mass or more, from the viewpoint of the effects of the present invention. Moreover, the content is preferably less than 20 parts by mass, more preferably less than 15 parts by mass, further preferably less than 10 parts by mass. Besides, the content of the oil also includes an amount of an oil contained as an extending oil in the rubber component and an amount of an oil contained in a different component such as sulfur.

(Zinc oxide)

A content of zinc oxide when compounded based on 100 parts by mass of the rubber component is preferably greater than 0.5 parts by mass, more preferably greater than 0.7 parts by mass, further preferably greater than 1 part by mass, from the viewpoint of processability. On the other hand, the content is preferably 10 parts by mass or less, more preferably less than 7 parts by mass, further preferably 5 parts by mass or less, from the viewpoint of abrasion resistance.

(Antioxidant)

The antioxidant is not particularly limited, and any of those commonly used in the tire industry can be appropriately used. Examples of the antioxidant include, for example, quinoline-based antioxidants, quinone-based antioxidants, phenol-based antioxidants, phenylenediamine-based antioxidants, a carbamic acid metal salt, and the like. Among them, the phenylenediamine-based antioxidants are preferable for the reason that they can exert an effect of improving ozone resistance better.

A content of the antioxidant when compounded based on 100 parts by mass of the rubber component is preferably greater than 0.5 parts by mass, more preferably greater than 0.8 parts by mass, further preferably 1.0 part by mass or more. On the other hand, the content is preferably less than 7.0 parts by mass, more preferably less than 5.0 parts by mass, further preferably 3.0 parts by mass or less.

(Stearic acid)

A content of stearic acid when compounded based on 100 parts by mass of the rubber component is preferably greater than 0.5 parts by mass, more preferably greater than 0.7 parts by mass, further preferably greater than 1.0 part by mass, from the viewpoint of processability. On the other hand, the content is preferably less than 10 parts by mass, more preferably less than 5 parts by mass, further preferably less than 3 parts by mass, from the viewpoint of vulcanization rate.

(Wax)

The wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, a selected special wax thereof, and the like. Among them, the paraffin wax is preferable. As the wax, for example, those manufactured and sold by Ouchi Shinko Chemical Industry Co., Nippon Seiro Co., Ltd., PARAMELT, etc., and the like can be used. These waxes may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 part by mass. On the other hand, the content is preferably less than 4.0 parts by mass, more preferably less than 3.0 parts by mass, further preferably less than 2.5 parts by mass.

(Vulcanizing agent)

The vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like. Among them, the sulfur-based vulcanizing agent is preferable. As the sulfur-based vulcanizing agent, for example, sulfur donors such as sulfur, morpholine disulfide, and the like, etc. can be used. Among them, it is preferable that the sulfur is used. The vulcanizing agents can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A content of the vulcanizing agent when compounded as based on 100 parts by mass of the rubber component is preferably greater than 0.3 parts by mass, more preferably 0.5 parts by mass or more, further preferably greater than 1.0 part by mass, further preferably greater than 1.5 parts by mass. On the other hand, the content is preferably less than 6.0 parts by mass, more preferably 5.0 parts by mass or less, further preferably less than 4.0 parts by mass. When the content of the vulcanizing agent is within the above-described ranges, appropriate reinforcing property tends to be obtained, and the effects of the present invention tend to be able to be exerted better. Besides, in a case where the vulcanizing agent includes a component other than sulfur like an oil-processing sulfur and the like, the content of the vulcanizing agent means a content of the sulfur component itself.

(Vulcanization accelerator)

The vulcanization accelerator is not particularly limited, and known vulcanization accelerators can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiourea-based vulcanization accelerator, and the guanidine-based vulcanization accelerator are preferable, and the sulfenamide-based vulcanization accelerator is more preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like.

A content of the vulcanization accelerator based on 100 parts by mass of the rubber component is preferably greater than 0.3 parts by mass, more preferably greater than 0.5 parts by mass, further preferably greater than 1.0 part by mass, further preferably 1.2 parts by mass or more. On the other hand, the content is preferably less than 4.0 parts by mass, more preferably less than 3.0 parts by mass, further preferably less than 2.0 parts by mass. When the content of the vulcanization accelerator is within the above-described ranges, breaking strength and elongation tend to be able to be secured, and the effects of the present invention tend to be able to be exerted better.

[Tire]

The tire of the present invention will be described while referring to the drawing as appropriate. However, the tire of the present invention is not limited to the drawing.

FIG. 1 is a schematic view of (only an upper right-side part of) a cross-section of a tire 1 cut along a plane passing through a tire rotation axis. The tire 1 comprises an inner liner 2 composed of a rubber composition of the present invention on its inner surface. A thickness D (mm) of the inner liner 2 is a thickness of the inner liner on a tire equatorial plane.

(Inequality (2))

The above-described A and D preferably satisfy the following inequality (2).

$$A \times D > 50 \qquad (2)$$

The right side of the inequality (2) is preferably 55, more preferably 59, further preferably 70, further preferably 79. On the other hand, the value on the left side of the inequality (2) is usually about 150 or less and may be 120 or less or 100 or less.

In the A of the inequality (2), a content of a recycled carbon black based on 100% by mass of carbon black is preferably less than 50% by mass, more preferably less than 40% by mass, further preferably less than 30% by mass, further preferably 25% by mass or less, further preferably less than 20% by mass, from the viewpoint of reinforcing property. Moreover, the content of the recycled carbon black is preferably greater than 5% by mass, more preferably 8% by mass or more, further preferably greater than 15% by mass, further preferably greater than 20% by mass, further preferably 25% by mass or more, from the viewpoint of environmental load reduction.

[Production]

The rubber composition for inner liner of the present invention can be produced by a commonly known method. For example, it can be produced by kneading the above-described components with a rubber kneading machine such as an open roll, a sealed type kneader (a Banbury mixer, a kneader, and the like), and the like. The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Furthermore, the base kneading step can also be divided into multiple steps as necessary. Examples of kneading conditions include,

but not particularly limited to, for example, a method of kneading at a discharge temperature of 150°C to 170°C for 3 to 10 minutes in the base kneading step and kneading at 50°C to 110°C for 1 to 5 minutes in the final kneading step.

The above-obtained rubber composition in an unvulcanized state is extruded into a sheet shape so that the rubber composition can be used as an inner liner, and an unvulcanized tire is produced by molding the extruded product as an inner liner together with other tire members on a tire forming machine by a usual method. A tire of the present invention can be obtained by heating and pressurizing (vulcanizing) this unvulcanized tire in a vulcanizing machine. Examples of a vulcanization condition include, but not particularly limited to, for example, a method of vulcanizing at 150°C to 200°C for 5 to 30 minutes.

[Application]

The tire comprising the inner liner of the present invention can be used as a tire for various applications, such as a tire for a passenger car, a heavy-duty tire for a truck/bus, etc., a motorcycle tire, and a high-performance tire such as a racing tire, etc., and the like.

EXAMPLES

Hereinafter, examples considered to be preferable in implementing the present invention (Examples) will be described, though the scope of the present invention is not limited to these Examples only. Rubber compositions and tires are examined which are obtained using various chemicals described below in accordance with each Table, and results calculated based on evaluation methods which will be described below are shown as performance indexes.

<Various chemicals>

Natural rubber (NR): TSR20
Halogenated butyl rubber (Cl-IIR): Chlorobutyl rubber HT1066 (chlorinated butyl rubber) manufactured by Exxon Chemical K. K.
Carbon black (CB): SHOW BLACK N660 manufactured by Cabot Japan K.K. ($N_2SA$: 35 $m^2/g$)
Recycled carbon black (rCB): Carbon black obtained from a pyrolysis process of a tire (Ash content: 17% by mass)
Fatty acid compound 1: Struktol WB16 manufactured by Schill + Seilacher (mixture of fatty acid calcium and fatty acid amide, amount of calcium elements: about 5% by mass)
Fatty acid compound 2: ULTRA FLOW500 manufactured by Performance Additives (fatty acid zinc salt)
Hydrocarbon resin: MARUKAREZ T-100AS manufactured by Maruzen Petrochemical Co., Ltd. (C5-based aliphatic hydrocarbon resin, softening point: 97 to 103°C)
Compatibilized resin: 40MS manufactured by Struktol GmbH (ternary copolymer consisting of ethylene/propylene/styrene, SP value: 8.9, softening point: 101 °C, Tg: 58°C)
Oil: Diana process PA32 manufactured by Idemitsu Kosan Co., Ltd. (paraffine component: 67% by mass, naphthene component: 28% by mass, aroma component: 5% by mass)
Zinc oxide: Zinc oxide No. 2 manufactured by Mitsui Mining & Smelting Co., Ltd.
Antioxidant: Antigen 6C manufactured by Sumitomo Chemical Co., Ltd. (6PPD, N-(1,3-dimethylbutyl)-N'-phenyl-p-phenylenediamine)
Stearic acid: Bead stearic acid "CAMELLIA" manufactured by NOF CORPORATION
Sulfur: HK-200-5 manufactured by Hosoi Chemical Industry Co., Ltd. (5% of oil-containing powdered sulfur)
Vulcanization accelerator 1: Nocceler M manufactured by Ouchi Shinko Chemical Industry Co., Ltd. (2-mercaptobenzothiazole)
Vulcanization accelerator 2: Nocceler DM manufactured by Ouchi Shinko Chemical Industry Co., Ltd. (di-2-benzothiazolyldisulfide)

<Examples and Comparative examples>

According to the compounding formulations shown in Table 1, using a 1.7 L Banbury mixer, chemicals other than sulfur and a vulcanization accelerator are kneaded for 5 minutes at until a temperature reaches a discharge temperature of 160°C to obtain a kneaded product. Next, sulfur and the vulcanization accelerator are added to the obtained kneaded product, and using a twin-screw open roll, the mixture is kneaded for 4 minutes until the temperature reaches 105°C, to obtain an unvulcanized rubber composition.

The unvulcanized rubber composition is extruded into a predetermined shape and press-vulcanized at 170°C

for 12 minutes, thereby obtaining a vulcanized rubber composition.

(Molding processability)

The above-described rubber composition in an unvulcanized state is molded into a sheet-shaped sample (10 mm in width × 200 mm in length × 2 mm in thickness), which is set on a metal disk. Furthermore, the same rubber composition is molded into a pressure-joined sample (70 mm in width × 100 mm in length × 2 mm in thickness). The sheet-shaped sample is pressure-joined to this pressure-joined sample with a force of 4.9 N. After 168 hours have past under an atmosphere of a temperature at 30°C, the attached sheet-shaped sample (unvulcanized) is peeled off, and adhesive force necessary for peeling off the sample is measured with a PICMA Tack Tester (manufactured by Toyo Seiki Seisaku-sho, Ltd.) Results thus obtained are indicated as indexes with values of the reference Comparative examples being as 100. The larger the index is, the higher the tack property over time (adhesive force over time) is, and thus respective members can be easily attached together, meaning that a sample having a large index is excellent in molding processability.

(Air permeation resistance)

An air permeation coefficient at 40°C of the above-described vulcanized rubber composition is calculated from each result of measurement according to JIS K 7126-1 :2006 using a gas permeability-measuring apparatus (GTR-11A/31A manufactured by GTR TEC Corporation). Additionally, using the following equation, respective air permeation coefficients are indicated as indexes with air permeation coefficient of the reference Comparative example being as 100. The smaller the air permeation coefficient is, the smaller the amount of air permeating the vulcanized rubber composition is, showing that such a vulcanized rubber composition is excellent in air permeation resistance.

Air permeation resistance index = (air permeation coefficient of reference Comparative example) / (air permeation coefficient of each compounding example) × 100

Table 1

| | Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| NR | 40 | 20 | 20 | 20 | 20 | 20 | 20 | 20 | 20 |
| Cl-IIR | 60 | 80 | 80 | 80 | 80 | 80 | 80 | 80 | 80 |
| Compounding amount (part by mass) | | | | | | | | | |
| CB | 30 | 30 | 45 | 45 | 45 | 45 | 45 | 55 | 65 |
| rCB | 30 | 30 | 15 | 15 | 15 | 15 | 15 | 5 | 15 |
| (Total amount) (A) | (60) | (60) | (60) | (60) | (60) | (60) | (60) | (60) | (80) |
| (rCB content) | (50) | (50) | (25) | (25) | (25) | (25) | (25) | (8) | (19) |
| Compounding amount (part by mass) | | | | | | | | | |
| Fatty acid compound 1 (B) | 5.0 | 5.0 | 5.0 | 3.0 | 3.0 | 3.0 | - | 1.0 | 3.0 |
| Fatty acid compound 2 (B) | - | - | - | - | - | - | 3.0 | - | - |
| Hydrocarbon resin | - | - | - | - | 3.0 | 0.5 | - | - | - |
| Compatibilized resin | 10 | 10 | 10 | 10 | 10 | 10 | 10 | 10 | 10 |
| Oil | 5 | 5 | 5 | 5 | 5 | 5 | 5 | 5 | 5 |
| Zinc oxide | 1.5 | 1.5 | 1.5 | 1.5 | 1.5 | 1.5 | 1.5 | 1.5 | 1.5 |
| Antioxidant | 1 | 1 | 1 | 1 | 1 | 1 | 1 | 1 | 1 |
| Stearic acid | 1.5 | 1.5 | 1.5 | 1.5 | 1.5 | 1.5 | 1.5 | 1.5 | 1.5 |
| Compounding amount (part by mass) | | | | | | | | | |
| Sulfur | 0.5 | 0.5 | 0.5 | 0.5 | 0.5 | 0.5 | 0.5 | 0.5 | 0.5 |
| Vulcanization accelerator 1 | 0.5 | 0.5 | 0.5 | 0.5 | 0.5 | 0.5 | 0.5 | 0.5 | 0.5 |
| Vulcanization accelerator 2 | 0.7 | 0.7 | 0.7 | 0.7 | 0.7 | 0.7 | 0.7 | 0.7 | 0.7 |
| B / A × 100 Inequality (1) | 8.3 | 8.3 | 8.3 | 5.0 | 5.0 | 5.0 | 5.0 | 1.7 | 3.8 |
| Thickness of IL (mm) (D) | 1.0 | 1.0 | 1.0 | 1.0 | 1.0 | 1.0 | 1.0 | 1.0 | 1.0 |
| A × D Inequality (2) | 60 | 60 | 60 | 60 | 60 | 60 | 60 | 60 | 80 |

- continued -

- continued -

| | Example | | | | | | | | |
|---|---|---|---|---|---|---|---|---|---|
| | 1 | 2 | 3 | 4 | 5 | 6 | 7 | 8 | 9 |
| Evaluation | | | | | | | | | |
| Molding processability index | 126 | 121 | 121 | 116 | 111 | 112 | 116 | 105 | 110 |
| Air permeation resistance index | 92 | 108 | 108 | 104 | 104 | 104 | 104 | 101 | 106 |
| Total performance | 218 | 229 | 229 | 220 | 215 | 216 | 220 | 206 | 226 |

- continued -

| | Comparative example | | | |
|---|---|---|---|---|
| | 1 | 2 | 3 | 4 |
| Compounding amount (part by mass) | | | | |
| NR | 20 | 20 | 40 | 20 |
| Cl-IIR | 80 | 80 | 60 | 80 |
| Compounding amount (part by mass) | | | | |
| CB | 45 | 30 | 30 | 60 |
| rCB | 15 | 30 | 30 | - |
| (Total amount) (A) | (60) | (60) | (60) | (60) |
| (rCB content) | (25) | (50) | (50) | (0) |
| Compounding amount (part by mass) | | | | |
| Fatty acid compound 1 (B) | - | - | - | 3.0 |
| Fatty acid compound 2 (B) | - | - | - | - |
| Hydrocarbon resin | - | - | - | - |
| Compatibilized resin | 10 | 10 | 10 | 10 |
| Oil | 5 | 5 | 5 | 5 |
| Zinc oxide | 1.5 | 1.5 | 1.5 | 1.5 |
| Antioxidant | 1 | 1 | 1 | 1 |
| Stearic acid | 1.5 | 1.5 | 1.5 | 1.5 |
| Compounding amount (part by mass) | | | | |
| Sulfur | 0.5 | 0.5 | 0.5 | 0.5 |
| Vulcanization accelerator 1 | 0.5 | 0.5 | 0.5 | 0.5 |
| Vulcanization accelerator 2 | 0.7 | 0.7 | 0.7 | 0.7 |
| B / A × 100 Inequality (1) | 0 | 0 | 0 | - |
| Thickness of IL (mm) (D) | 1.0 | 1.0 | 1.0 | 1.0 |
| A × D Inequality (2) | 60 | 60 | 60 | 0 |
| Evaluation | | | | |
| Molding processability index | 100 | 100 | 105 | 100 |
| Air permeation resistance index | 100 | 100 | 83 | 100 |
| Total performance | 200 | 200 | 188 | 200 |

<Embodiments>

Examples of preferable embodiments are described below.

[1] A rubber composition for inner liner, the rubber composition comprising a rubber component, carbon black, and a fatty acid compound,
wherein the carbon black comprises a recycled carbon black.
[2] The rubber composition for inner liner of [1] above, wherein the fatty acid compound comprises at least one selected from the group consisting of a fatty acid amide, a fatty acid ester, and a fatty acid salt.
[3] The rubber composition for inner liner of [1] or [2] above,

wherein the rubber component comprises a butyl-based rubber, and
wherein a content of the butyl-based rubber in the rubber component is greater than 70% by mass and less than 90% by mass, preferably greater than 70% by mass and less than 85% by mass, or preferably greater than 70% by mass and 80% by mass or less, or preferably 80% by mass or more and less than 90% by mass, or preferably 80% by mass or more and less than 85% by mass.

[4] The rubber composition for inner liner of any one of [1] to [3] above, wherein a content of the recycled carbon black in the carbon black is greater than 5% by mass and less than 40% by mass, preferably 8% by mass or more and less than 30% by mass, more preferably greater than 15% by mass and 25% by mass or less, further preferably greater than 20% by mass and 25% by mass or less.
[5] The rubber composition for inner liner of any one of [1] to [4] above, wherein a content of the fatty acid compound based on 100 parts by mass of the rubber component is 0.5 parts by mass or more and 3.0 parts by mass or less, preferably greater than 1.0 part by mass and 3.0 parts by mass or less, more preferably greater than 1.5 parts by mass and 3.0 parts by mass or less.
[6] The rubber composition for inner liner of any one of [1] to [5] above,

wherein the rubber composition comprises a hydrocarbon resin, and
wherein a content of the hydrocarbon resin based on 100 parts by mass of the rubber component is 0.5 parts by mass or more and 3.0 parts by mass or less, preferably greater than 0.8 parts by mass and 3.0 parts by mass or less, more preferably greater than 1.0 part by mass and less than 2.5 parts by mass.

[7] The rubber composition for inner liner of any one of [1] to [6] above, wherein, when a content in part by mass of the carbon black based on 100 parts by mass of the rubber component is referred to as A and a content in part by mass of the fatty acid compound based on 100 parts by mass of the rubber component is referred to as B, A and B satisfy the following inequality (1), and further, the right side of the inequality (1) is preferably 2.0, more preferably 3.7, further preferably 4.9, further preferably 8.0:

$$B / A \times 100 > 1.5 \qquad (1).$$

[8] A tire comprising an inner liner composed of the rubber composition for inner liner of any one of [1] to [7] above.
[9] The tire of [8] above, wherein, when a content in part by mass of the carbon black based on 100 parts by mass of the rubber component is referred to as A and a thickness in mm of the inner liner is referred to as D, A and D satisfy the following inequality (2), and further, the right side of the inequality (2) is preferably 55, more preferably 59, further preferably 70, further preferably 79:

$$A \times D > 50 \qquad (2).$$

REFERENCE SIGNS LIST

| | |
|---|---|
| 1 | Tire |
| 2 | Inner liner |
| D | Thickness of inner liner |
| EP | Tire equatorial plane |

## Claims

1. A rubber composition for inner liner, the rubber composition comprising a rubber component, carbon black, and a fatty acid compound,
wherein the carbon black comprises a recycled carbon black.

2. The rubber composition for inner liner of claim 1, wherein the fatty acid compound comprises at least one selected from the group consisting of a fatty acid amide, a fatty acid ester, and a fatty acid salt.

3. The rubber composition for inner liner of claim 1 or 2,

   wherein the rubber component comprises a butyl-based rubber, and
   wherein a content of the butyl-based rubber in the rubber component is greater than 70% by mass and less than 90% by mass.

4. The rubber composition for inner liner of any one of claims 1 to 3, wherein a content of the recycled carbon black in the carbon black is greater than 5% by mass and less than 40% by mass.

5. The rubber composition for inner liner of any one of claims 1 to 4, wherein a content of the fatty acid compound based on 100 parts by mass of the rubber component is 0.5 parts by mass or more and 3.0 parts by mass or less.

6. The rubber composition for inner liner of any one of claims 1 to 5,

   wherein the rubber composition comprises a hydrocarbon resin, and
   wherein a content of the hydrocarbon resin based on 100 parts by mass of the rubber component is 0.5 parts by mass or more and 3.0 parts by mass or less.

7. The rubber composition for inner liner of any one of claims 1 to 6, wherein, when a content in part by mass of the carbon black based on 100 parts by mass of the rubber component is referred to as A and a content in part by mass of the fatty acid compound based on 100 parts by mass of the rubber component is referred to as B, A and B satisfy the following inequality (1):

$$B / A \times 100 > 1.5 \quad (1).$$

8. A tire comprising an inner liner composed of the rubber composition for inner liner of any one of claims 1 to 7.

9. The tire of claim 8, wherein, when a content in part by mass of the carbon black based on 100 parts by mass of the rubber component is referred to as A and a thickness in mm of the inner liner is referred to as D, A and D satisfy the following inequality (2):

$$A \times D > 50 \quad (2).$$

FIG. 1

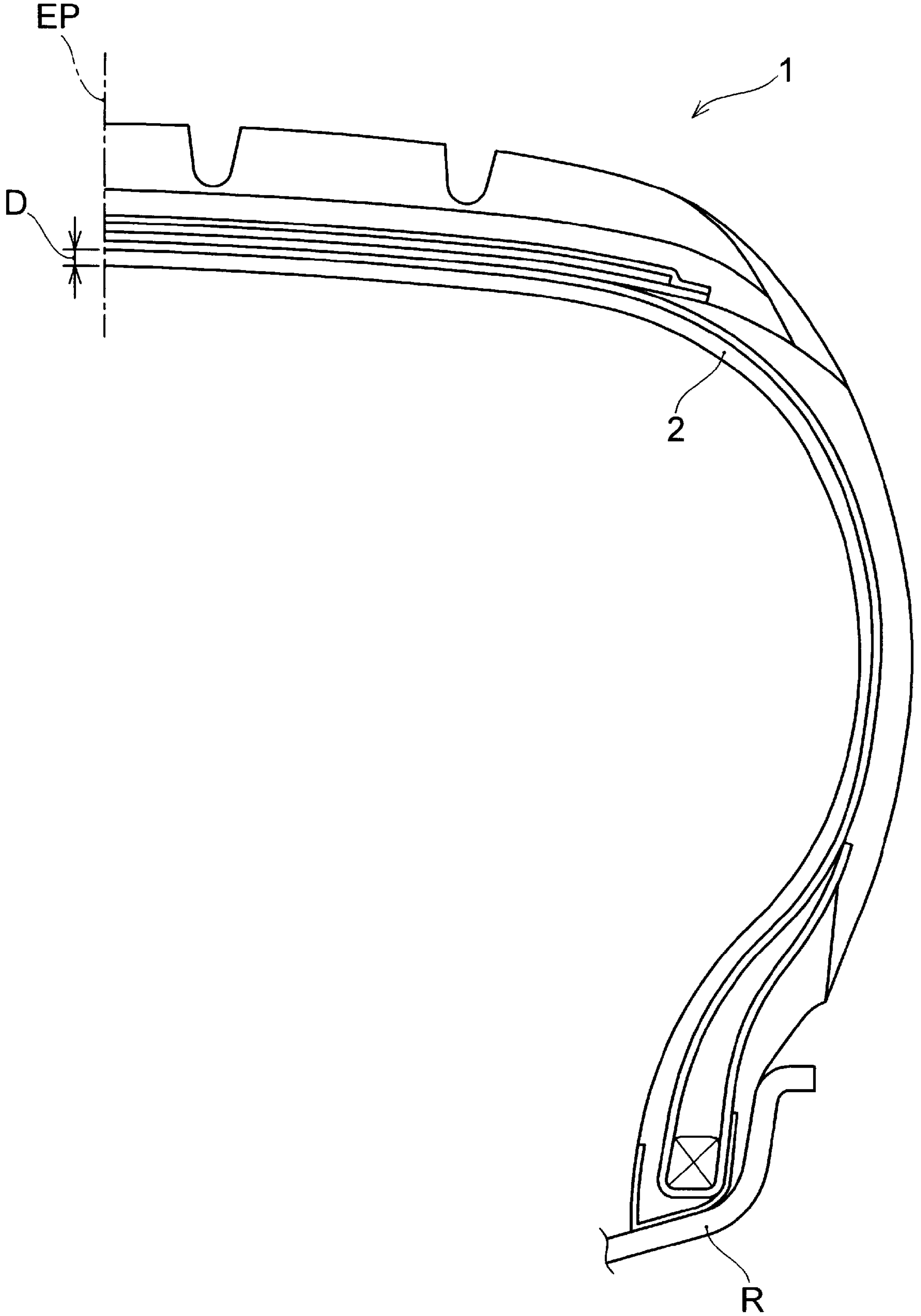

Europäisches Patentamt
European Patent Office
Office européen des brevets

# EUROPEAN SEARCH REPORT

Application Number
EP 23 18 2452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 1 443 798 A (SHANGHAI LUREN ECOLOGICAL ECON [CN]) 24 September 2003 (2003-09-24)<br>* page 1 *<br>----- | 1-9 | INV.<br>B60C1/00<br>C08L23/28 |
| X | EP 3 327 079 B1 (CONTINENTAL REIFEN DEUTSCHLAND GMBH [DE])<br>8 December 2021 (2021-12-08)<br>* paragraph [0001] - paragraph [0008] *<br>* example E4; table 3 *<br>* paragraph [0091] - paragraph [0093] *<br>----- | 1-9 | |
| X | US 2013/281581 A1 (WONG VINCENT W Y [CA] ET AL) 24 October 2013 (2013-10-24)<br>* paragraph [0001] - paragraph [0009] *<br>----- | 1-9 | |

| TECHNICAL FIELDS SEARCHED (IPC) |
|---|
| B60C<br>C08L |

The present search report has been drawn up for all claims

1

| Place of search | Date of completion of the search | Examiner |
|---|---|---|
| Munich | 12 December 2023 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 18 2452

This annex lists the patent family members relating to the patent documents cited in the above-mentioned European search report. The members are as contained in the European Patent Office EDP file on
The European Patent Office is in no way liable for these particulars which are merely given for the purpose of information.

12-12-2023

| Patent document cited in search report | | Publication date | Patent family member(s) | | Publication date |
|---|---|---|---|---|---|
| CN 1443798 | A | 24-09-2003 | NONE | | |
| EP 3327079 | B1 | 08-12-2021 | DE 102016223679 | A1 | 30-05-2018 |
| | | | EP 3327079 | A1 | 30-05-2018 |
| | | | ES 2906429 | T3 | 18-04-2022 |
| US 2013281581 | A1 | 24-10-2013 | CA 2807851 | A1 | 24-08-2013 |
| | | | US 2013281581 | A1 | 24-10-2013 |
| | | | US 2015045497 | A1 | 12-02-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017018386 A
- EP 3427975 A
- JP 6856781 B
- EP 3173251 A

### Non-patent literature cited in the description

- *Rubber Chemistry and Technology,* 2012, vol. 85 (3), 408-449, 438, , 440, , 442
- Comparison of surface morphology with chemistry between pyrolysis carbon black and commercially available carbon black. *Powder Technology,* 2005, vol. 160, 190-193